# EUROPEAN PATENT SPECIFICATION

(11) **EP 3 339 671 B1**
(45) Date of publication and mention of the grant of the patent: **26.08.2020**
(21) Application number: 16002699.3
(22) Date of filing: 20.12.2016
(51) Int. Cl.: F16D 59/00, F16D 41/07

(54) **SUPPORT FOR A MEDICAL DEVICE**
TRÄGER FÜR EINE MEDIZINISCHE VORRICHTUNG
SUPPORT DE DISPOSITIF MÉDICAL

(43) Date of publication of application: 27.06.2018
(73) Proprietor: Ondal Medical Systems GmbH, 36088 Hünfeld (DE)
(72) Inventor: Happel, Jonathan, 36142 Tann (Rhön) (DE)
(74) Representative: Graf von Stosch, Andreas

(56) References cited:
- US-A1- 2002 068 985
- US-A1- 2006 175 499
- US-A1- 2016 281 800
- US-A1- 2016 298 789

## Description

### Technical Field

The present invention relates to a support for a medical device, preferably for a display device of a medical device, according to claim 1. The support for a device comprises a first support member and a second support member connected by a pivot joint to enable relative movement of the support members about an axis of rotation. The second support member has a carrier member for attaching a display device to the second support member and the pivot joint comprises a freewheel clutch with an inner ring element connected to one of the support members, and with an outer ring element that is arranged coaxially with the inner ring element. The pivot joint further comprises a friction brake for exerting a force on one of the ring elements. The outer ring element is rotatable about the axis relative to the inner ring element in a first direction of rotation and is connected to the other support member. The outer ring element is able to rotate together with the inner ring element in an opposite second direction of rotation when the frictional force exerted by the friction brake is overcome.

Further, the present invention also relates to a stand according to the respective independent claim. Also, the present invention also relates to a wall or ceiling mount according to the respective independent claim.

More particularly, the present invention relates especially to a support with individual features of claim 1, to a stand with individual features of the respective independent claim and to a wall or ceiling mount with individual features of the respective independent claim.

Supports for display devices, such as supports for medical devices or display screens of medical devices or of personal computers e.g. in an operating theatre or in an examination room generally comprise at least a first support part and at least a second support part pivotally connected together. A free end of one support part may be mounted to a wall, ceiling or at a movable structure such as a cart. Wall and ceiling mounting may be directly or via a supporting arm system or a support post. The free end of the other support part is attached to a carrier part or similar for mounting the medical device or display screen. The back surface of the device or display screen may be attached to the carrier part via a quick release mechanism to enable the screen to be detached from the support for repair or replacement.

### Background of the Invention

US 2006/0175499 A1 discloses a support for an electrical display device such as a monitor. The support includes a pair of support members connected by a pivot joint to enable relative movement of the support members about an axis of rotation. The joint includes an outer hub mounted for rotation about the axis within a clamping member attached to one support member, an inner hub mounted to the other support member coaxial with the outer hub and being rotatable about the axis relative to the outer hub in a first direction, and a clutch member between the inner and outer hub engageable in response to rotation of the inner hub in the opposite direction such that the outer hub rotates together with the inner hub when a compressive force exerted on the outer hub by the clamping member is overcome.

A disadvantage of this support is that the position of the monitor is not hold precisely when being moved in upward direction because the clutch member, which is formed as a helical spring, needs some movement before it stops rotation between outer hub and inner hub. Further, such helical springs may break such that the support arm with the attached display rotates downwardly, eventually destroying the attached device. Further, possible maximum load of the support is limited due to the helical spring clutch member as the clutch may slip under heavy loads.

US 2008/0054133 A1 discloses a supporting arm for a monitor screen. The supporting arm comprises a clipping seat, a securing seat, a support seat, a suspension arm and a cross-shaped joint formed into an integrated unit, and a cross-shaped linking frame of the cross-shaped joint. The lateral sides of the vertical connector end of the linking frame is mounted with a plurality of pads, a load ratchet wheel, a clutch ratchet wheel, a mounting tube, a wave shaped spring, a lateral seat and a circular rim by a screw bolt and a blocking nut, forming into an up-down joint mechanism for up and down adjustment of the monitor screen. The external face of the clutch ratchet wheel is provided with a plurality of protruded pegs. The protruded peg is in engagement with a slot formed at the lateral seat, and the clutch ratchet wheel is in engagement with the load ratchet wheel such that after a prolong period of use, the clutch ratchet wheel will not move eccentrically or move downward.

A disadvantage of this supporting arm is that the ratchet wheel generates a clicking noise when the monitor is adjusted upward and the ratchet wheel is actuated. Further, the solution according to US 2008/0054133 A1 is relatively complex and uses a large number of parts to realize the up-down joint mechanism. Also the position of the monitor is not hold precisely when being moved in upward direction. The monitor will drop down a bit (around 1° or more depending on the number of notches present on the ratchet wheel).

US 2002/0068985 A1 describes an information processing apparatus with a pivotal support mechanism for a display unit comprising a one-way clutch mechanism interposed between a base bracket and a torque bracket.

### Summary of the Invention

Accordingly, it is an aim of the present invention to provide an improved support for a display device that at least partially avoids the disadvantage of the prior art. Further or alternatively it is an aim of the present invention to provide a stand and/or a wall or ceiling mount for supporting a display device including such an improved support.

The inner ring element is rotatably connected to the first support member, and the outer ring element is fixedly connected to the second support member with the carrier member, wherein the friction brake exerts a force on the inner ring element, and wherein the freewheel clutch further comprises a plurality of retaining elements arranged radially between the inner ring element and the outer ring element for blocking engagement between the inner ring element and the outer ring element in the second direction of rotation of the outer ring element and for disengagement between the inner ring element and the outer ring element in the opposite first direction of rotation.

The freedom to rotate of the outer ring element relative to the inner ring elements is depending on the direction of the rotation. As the inner ring element is fixed via the friction brake to the first support member, the outer ring may be rotated in one direction (upward direction in respect to gravity vector), but not in the other direction (downward direction in respect to vector of gravity).

The inner ring element of the blocking freewheel clutch won't move when the second support member with the carrier for the display device is tilted upright using the freedom to rotate of the outer ring element relative to the inner ring element. In the opposite direction (downward rotation in respect to gravity vector) the inner ring element moves in combination with the outer ring element against the force of the friction brake, which has to be overcome.

Accordingly there is no friction when tilting the second support member with the carrier for the display device upward. Only the gravitational force has to be overcome. In comparison to a friction brake applied also in the upward direction, the movement force is reduced by at least 50%.

Accordingly, with the present solution, the support is provided with a pivotable joint mechanism that is noise free when the support member with the display device is moved in any of pivot directions/directions of rotation. Further, due to the freewheel clutch having a plurality of retaining elements, the position of the second support member with the carrier for the display device holds its pivot position precisely and will not drop down when an upward movement is stopped and is reliable. Even in the unlikely case that one of the retaining element breaks, the remaining retaining elements will effectively block an un-intended movement and no slipping of the freewheel clutch can occur. Also the inventive support may carry heavier loads than the prior art without the risk of slipping of the clutch.

Further according to the invention, the friction brake comprises a pressure element that is fixedly connected to an axial side of the inner ring element of the freewheel clutch and wherein the pivot joint comprises a screw which forms an axle and a screw nut.

In a preferred embodiment of the invention, the retaining elements are each formed as one of a sprag, a ball or a roller. Such retaining elements are reliable with no or little risk that a retaining element breaks. Also the retaining elements formed as sprags, reels or balls have a very good switching accuracy.

In a preferred embodiment of the invention, the retaining elements are evenly distributed between the inner ring element and the outer ring element. The even distribution of the retaining elements guarantees for an even distribution of blocking/retaining forces in the freewheel clutch and accordingly for a long service live of the freewheel clutch.

Preferably, the inner ring element and the outer ring element are rotationally linked by means of a ball bearing. Accordingly, any upward movement of the second support member will be almost free of frictional forces even under the condition of heavy loads in form of medical devices or display devices being attached to the second support arm.

In a further preferable embodiment of the invention, the friction brake comprises a pressure element that is fixedly connected to the inner ring element of the freewheel clutch. Fixed connection between the inner ring element and the pressure element is realized by means of a slot and key connection. Either one of the pressure element and the inner ring element may have one of the slot and key. By realizing a fixed connection between the inner ring element and the pressure element braking force can be transferred from the friction brake to the inner ring element by a 100%.

In an advantageous embodiment, the friction brake comprises a friction lining that cooperates with the pressure element. Preferably, the friction lining is formed as an annular disk element. With the friction lining, wear of the adjacent parts of the support is avoided and only the friction lining is subject to wear thus prolonging the life time of the support. Friction lining may be formed out of Rubber, ceramic, plastics or even gliding materials.

In a further preferred embodiment of the invention, the pressure element is formed as a sleeve with a friction flange formed at one end for contact with the friction lining. The sleeve may have a diameter such that the sleeve may at least be partially inserted in the ventral opening of the inner ring element so that the sleeve is in contact with an axle which may be formed by a screw member or the like. Wear of the inner ring element is accordingly avoided and the service live of the freewheel clutch is enhanced.

Preferably, the friction brake includes two sets of pressure elements and friction linings, one set on each axial side of the inner ring element. Frictional forces will accordingly be evenly distributed to both axial sides of the freewheel clutch improving longevity of the support.

According to a further aspect, the present invention provides a stand for supporting a display device, especially a display device of a medical equipment in a hospital or other medical environment, comprising one or more supports according to one or more of the preceding claims. The stand including the support realizes all the advantages, as described above.

According to a still further aspect, the present invention provides wall or ceiling mount for supporting a display device, especially a display device of a medical equipment in a hospital or other medical environment, comprising one or more supporting arm systems according to one or more of the preceding claims. The ceiling mount including the support realizes all the advantages, as described above.

### Brief Description of the Drawings

The above and further features and advantages of the invention will become more readily apparent from the following detailed description of preferred embodiments of the invention with reference to the accompanying drawings, in which like reference characters identify like features, and in which:
Fig. 1 is an exploded perspective view of the support with a display device indicated at a second support member;
Fig. 2 is a cut along the line II - II in Fig. 1;
Fig. 3 is a cut view of the freewheel clutch according to the marking III in Fig. 2;
Fig. 4 is a cut view of a freewheel clutch according to a further embodiment of the support;
Fig. 5 is a perspective view of a ceiling mount with a support and a display device.
Fig. 6 is a perspective view of a stand with a support and a display device.

### Detailed Description of the Preferred Embodiments

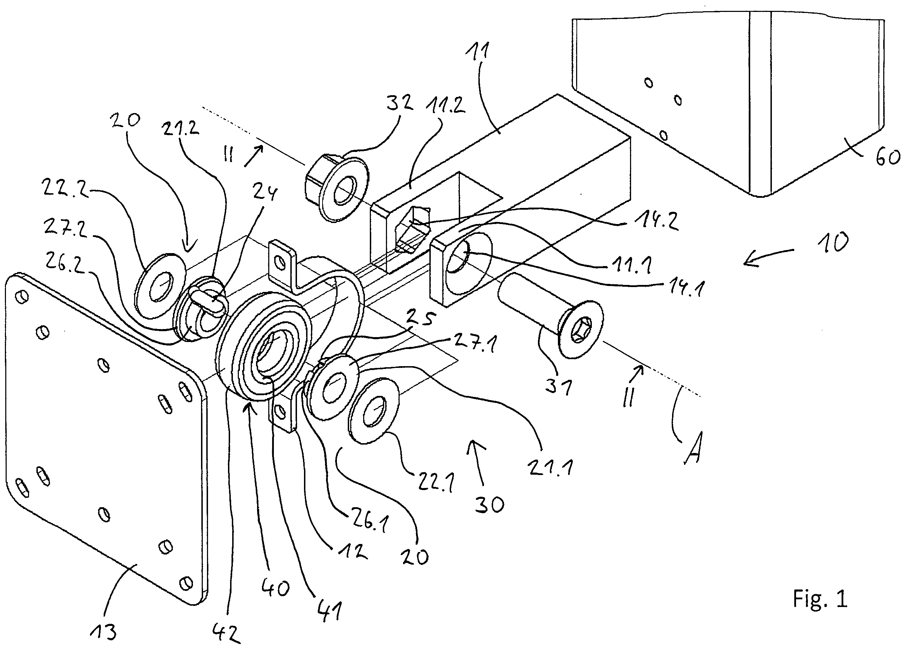

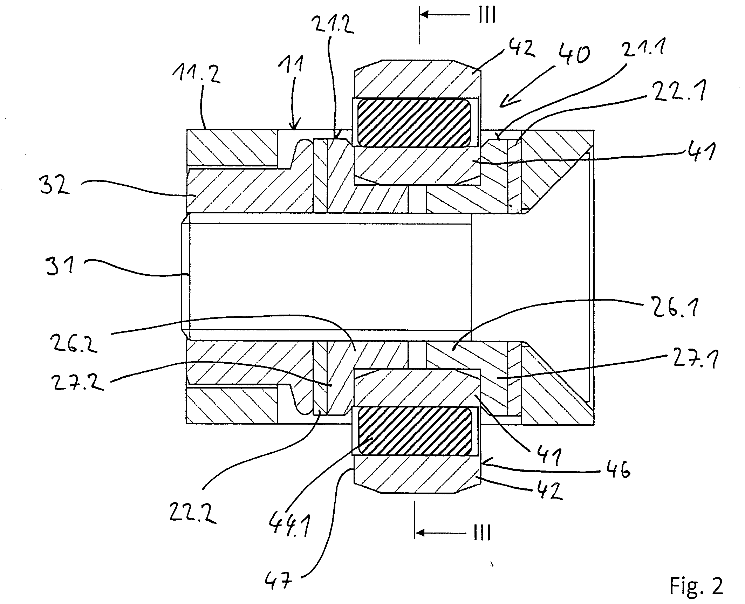

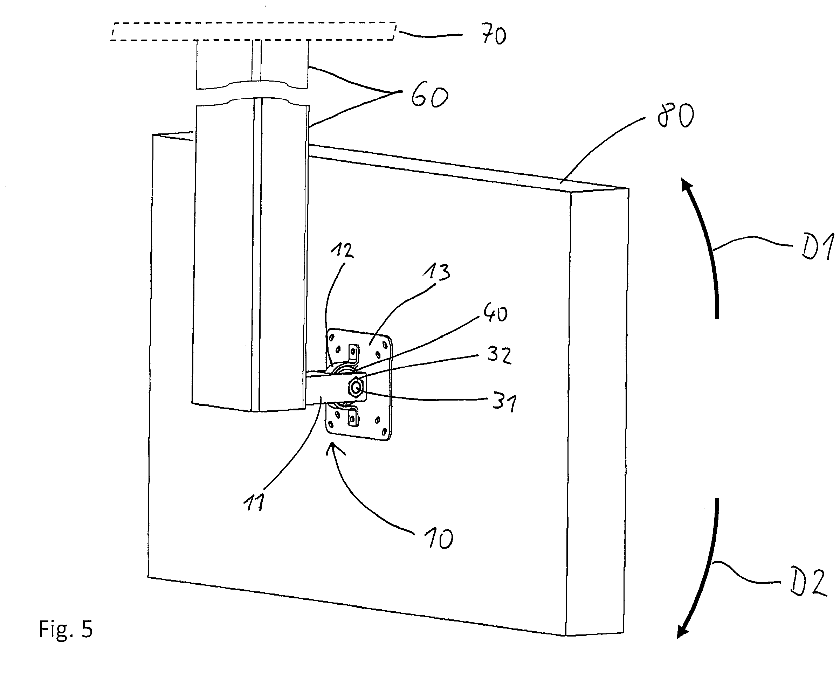

Figures 1 to 3 and 5 show a first embodiment of a support 10 for a display device 80 according to the present invention. Such supports 10 are used e.g. in the field of medical technology for carrying display devices 80 of personal computers or medical devices or display devices of medical equipment used e.g. in association with medical treatment rooms. In Fig. 5 the support 10 is integrated in a wall or ceiling mount 60 as will be described in further detail below.

The support 10 comprises a first support member 11 formed as a short straight arm and a second support member 12 that are both connected via a pivot joint 30 such that relative movement of the support members 11, 12 about an axis A of rotation is possible. The second support member 12 is formed in the present embodiment as a curved cramp and is connected to a carrier member 13 which is formed as an attachment plate. In an alternative embodiment, the carrier member 13 may be an integral part of the second support member 12.

By means of the carrier member 13 / attachment plate a display device 80 (Fig. 5) may be mounted to the second support member 12 and accordingly to the support 10. Alternatively, a medical device or a part of a medical device may be attached to the carrier member 13.

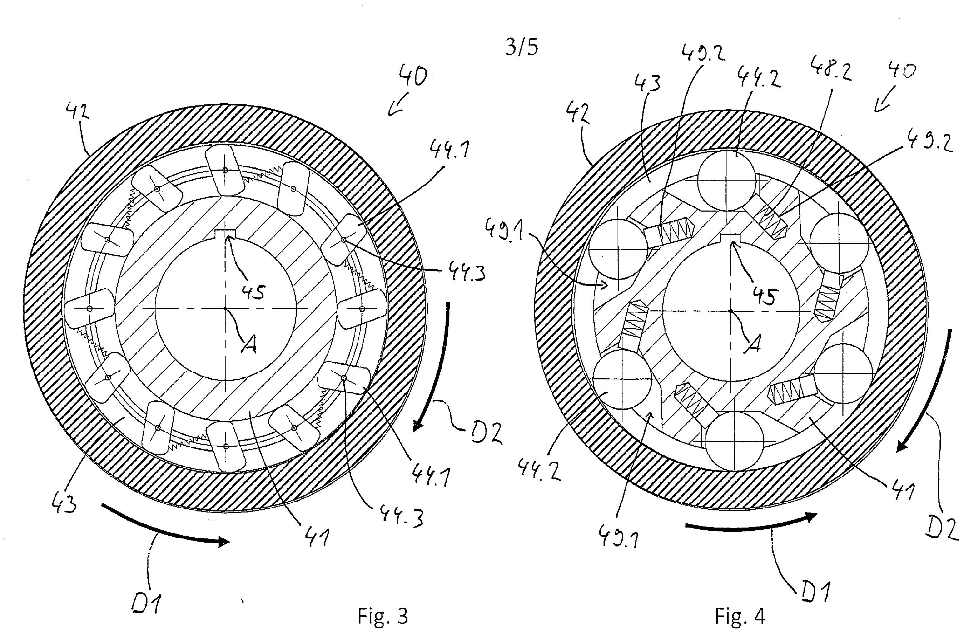

The pivot joint 30 comprises a freewheel clutch 40 with a first clutch member formed as an inner ring element 41 and with a second clutch member formed as an outer ring element 42. The inner ring element 41 is rotatably connected to the first support member 11 and is under a frictional force of a friction brake 20. The outer ring element 42 can rotate about an axis A relative to the inner ring element 41 in a first direction D1 of rotation (see Fig. 3) and is fixedly connected to the second support member 12. The inner ring element (41) and the outer ring element (42) are rotationally linked by means of a ball bearing that is not visible in the Figures.

The outer ring element 42 is able to rotate together with the inner ring element 41 in a second direction D2 of rotation, opposite to the first direction D1 of rotation, when the frictional force exerted on the inner ring member 41 by the friction brake 20 is overcome.

Free rotation in the first direction D1 is realized in that the freewheel clutch 40 comprises at least one, preferably a plurality of retaining elements 44.1. The retaining elements 44.1 are arranged in the interior 43 of the clutch 40, radially between the inner ring element 41 and the outer ring element 42 for blocking engagement between the inner ring element 41 and the outer ring element 42 in the second direction D2 of rotation of the outer ring element 42 relative to the inner ring element and for disengagement between the inner ring element 41 and the outer ring element 42 in the opposite first direction D1 of rotation. The retaining elements 44.1 are formed as sprags that are each pivotably mounted on a swivel bearing and that are each preloaded towards a contact with the ring elements 41, 42 by elastic pressure elements 48.1 which are formed as spiral pressure springs.

The friction brake 20 in the shown embodiment comprises two pressure element 21.1, 21.2 and two friction linings 22.1, 22.2 arranged coaxially with inner ring element 41. A set of one pressure element 21.1, 21.2 and one friction lining 22.1, 22.2 is arranged on each axial side 46, 47 of the inner ring element 41. The pressure elements 21.1, 21.2 are each formed as a sleeve 26.1, 26.2 with a friction flange 27.1, 27.2 formed at one end for contact with the friction lining 22.1, 22.2.

The pivot joint 30 further comprises a screw 31 which forms an axle and a screw nut 32. The first support element 11 is formed at one end as a fork with a first fork arm 11.1 and a second fork arm 11.2. Both fork arms 11.1 and 11.2 have openings 14 and 15 for receiving the screw nut 32 and the screw 31 respectively.

In assembled state, the pivot joint 30 with the freewheel clutch 40 and the friction brake 20 with the two sets of pressure elements 21.1, 21.2 and friction linings 22.1, 22.2 are disposed between the two fork arms 11.1, 11.2 of the first support member 11 with the screw 31 being arranged in the axis A.

Friction brake 20 is connected with positive fit to the inner ring element 41 by means of a slot and key (or tongue and groove) connection formed by a key 24 that is arranged on the sleeve 26.2 of pressure element 21.2 and by a counter slot 25 at the sleeve 26.1 of pressure element 21.1 and a slot 45 at the inner circumference of the inner ring 41 (see Figs. 1, 2 and 3). Alternatively connection between inner ring element 41 and friction brake may also be realized by a bonded connection, e.g. by adhesive bonding, welding or the like.

The freedom to rotate of the outer ring element 42 relative to the inner ring element 41 is depending on the direction of the rotation. As the inner ring element 41 is fixed by means of the friction brake 20 to the first support member 11, the outer ring element 42 may be rotated in the first direction D1 (upward direction in respect to gravity in the assembled state), but not in the opposite second direction D2 (downward direction in respect to gravity). Accordingly there is no friction involved when tilting the second support member 12 with the carrier member 13 for the display device upward (in respect to gravity). Only the gravitational force has to be overcome.

In Fig. 5 the support according to Figs. 1 to 3 is attached to a wall or ceiling mount 60 in that the first support member 11 is connected by means of a screwed connection to the wall or ceiling mount 60. The wall or ceiling mount itself is mounted at a ceiling 70. A display device 80 is mounted at the plate like carrier member 13 by means of screw connections such that the display device may be removed. The display device 80 at carrier member 13 may be tilted in direction D1 (upward with respect to gravity) without any braking frictional forces to be overcome. Only the gravitational force has to be overcome.

Fig. 4 shows a further embodiment of a freewheel clutch for use in association with a support 10 according to Figs. 1 and 2 and 5 to 6.

For reference numerals and functions not described in the following text to this embodiment, reference, is made to the description of Figs. 1 to 3 which is herewith incorporated by reference.

The embodiment of Fig. 4 differs from the one described in Figs. 1 to 3 in that the retaining elements are formed as rollers 44.2 located in individual roller seats 49.1. Each roller 44.2 is under the pressure of an elastic element 48.2 located in a bore 49.2 and pushing the respective roller 44.2 radially outwardly. The rollers 44.2 will effect a blocking engagement between the inner ring element 41 and the outer ring element 42 in the second direction D2 of rotation of the outer ring element 42 relative to the inner ring element and a disengagement between the inner ring element 41 and the outer ring element 42 in the opposite first direction D1 of rotation. Function of the freewheel clutch 40 according to this embodiment and cooperation with the friction brake is similar to the one described previously with respect to Figs. 1-3.

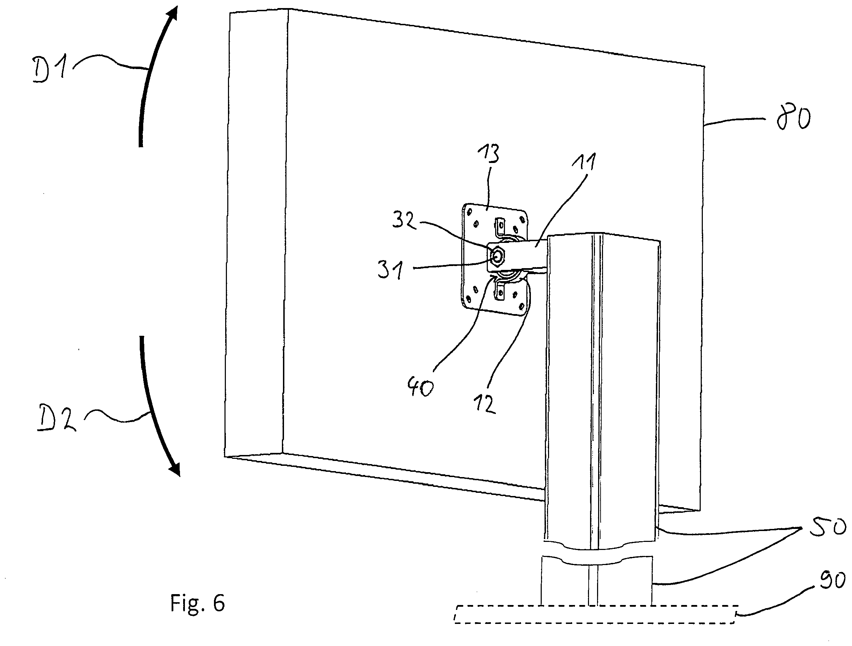

Figure 6 shows a stand 50 mounted on a floor 90. A support 10 according to one of the previously described embodiments is mounted at the stand 50 in that the first support member 11 is connected to the stand 50 by means of a screwed connection. A display device 80 is mounted at the plate like carrier member 13 by means of screw connections such that the display may be removed. The display device 80 at carrier member 13 may be tilted in direction D1 (upward with respect to gravity) without any braking frictional forces to be overcome. Only the gravitational force has to be overcome.

### LIST of REFERENCE NUMERALS

- 10: support
- 11: first support member
- 11.1: first fork arm
- 11.2: second fork arm
- 12: second support member
- 13: carrier member / attachment plate
- 14: opening
- 15: opening

- 20: friction brake
- 21.1: pressure element
- 21.2: pressure element
- 22.1: friction lining
- 22.2: friction lining

- 24: key
- 25: counter slot
- 26.1: sleeve
- 26.2: sleeve
- 27.1: flange
- 27.2: flange
- 30: pivot joint
- 31: axle / screw
- 32: screw nut

- 40: freewheel clutch
- 41: inner ring element
- 42: outer ring element
- 43: interior
- 44.1: retaining element/ sprag
- 44.2: retaining element / roller
- 44.3: swivel bearing
- 45: slot
- 46: first axial side
- 47: second axial side
- 48.1: elastic pressure elements
- 48.2: elastic pressure elements
- 49.1: roller seat
- 49.2: bore

- 50: stand
- 60: wall or ceiling mount
- 70: ceiling
- 80: display device
- 90: floor

- A: axis (of rotation)
- D1: first direction of rotation
- D2: second direction of rotation

## Claims

1. A support (10) for a medical device comprising a first support member (11) and a second support member (12) connected by a pivot joint (30) to enable relative movement of the support members (11, 12) about an axis (A) of rotation, the second support member (12) having a carrier member (13) for attaching the device to the second support member (12), the pivot joint (30) comprising a freewheel clutch (40) with an inner ring element (41) connected to one of the support members (11, 12), and an outer ring element (42) arranged coaxially with the inner ring element (41), the pivot joint (30) further comprising a friction brake (20) for exerting a force on one of the ring elements (41, 42), the outer ring element (42) being rotatable about the axis (A) relative to the inner ring element (41) in a first direction (D1) of rotation and being connected to the other support member (12, 11), the outer ring element (42) being able to rotate together with the inner ring element (41) in an opposite second direction (D2) of rotation when the frictional force exerted by the friction brake (20) is overcome,
**characterized in that**
the inner ring element (41) is rotatably connected to the first support member (11), and the outer ring element (42) is fixedly connected to the second support member (12) with the carrier member (13), wherein the friction brake (20) exerts a force on the inner ring element (41), the freewheel clutch (40) further comprising a plurality of retaining elements (44.1, 44.2) arranged radially between the inner ring element (41) and the outer ring element (42) for blocking engagement between the inner ring element (41) and the outer ring element (42) in the second direction (D2) of rotation of the outer ring element (42) and for disengagement between the inner ring element (41) and the outer ring element (42) in the opposite first direction (D1) of rotation, wherein the friction brake (20) comprises a pressure element (21.1, 21.2) that is fixedly connected to an axial side (46, 47) of the inner ring element (41) of the freewheel clutch (40) for transferring the braking force from the friction brake (20) to the inner ring element (41) and
wherein the pivot joint (30) comprises a screw (31) which forms an axle and a screw nut (32) and wherein the axle and the screw nut (32) are configured to exert the force on one of the ring elements.

2. Support (10) according to claim 1, **characterized in that** the retaining elements are each formed as one of a sprag (44.1), a ball or a roller (44.2)

3. Support (10) according to any of the preceding claims, **characterized in that** the retaining elements (44.1, 44.2) are evenly distributed between the inner ring element (41) and the outer ring element (42).

4. Support (10) according to any of the preceding claims, **characterized in that**, the inner ring element (41) and the outer ring element (42) are rotationally linked by means of a ball bearing.

5. Support (10) according to claim 1, **characterized in that** the pressure element (21.1, 21.2) cooperates with a friction lining (22.1, 22.2), preferably formed as an annular disk member.

6. Support (10) according to any one of claims 1 to 5, **characterized in that** the pressure element is fixedly connected to the inner ring element by means of a slot and key connection.

7. Support (10) according to any one of claims 1 to 6, **characterized in that** the pressure element (21.1, 21.2) is formed as a sleeve (26.1, 26.2) with a friction flange (27.1, 27.2) formed at one end for contact with the friction lining (22.1, 22.2).

8. Support (10) according to any one of claims 1 to 6, **characterized in that** the friction brake (20) includes two sets of pressure elements (21.1, 21.2) and friction linings (22.1, 22.2), one set on each axial side (46, 47) of the inner ring element (41).

9. A stand (50) for supporting a display device (80), especially a display device (80) of a medical equipment in a hospital or other medical environment, comprising a support (10) according to one or more of the preceding claims.

10. A wall or ceiling mount (60) for supporting a display device (80), especially a display device (80) of a medical equipment in a hospital or other medical environment, comprising a support (10) according to one or more of claims 1 to 8.

## Patentansprüche

1. Ein Träger (10) für ein medizinisches Gerät, umfassend ein erstes Tragelement (11) und ein zweites Tragelement (12), die durch ein Drehgelenk (30) verbunden sind, um eine relative Bewegung der Tragelemente (11, 12) um eine Drehachse (A) zu ermöglichen, wobei das zweite Tragelement (12) ein Tragelement (13) zum Befestigen der Vorrichtung an dem zweiten Tragelement (12) aufweist, wobei das Drehgelenk (30) eine Freilaufkupplung (40) mit einem Innenringelement (41), das mit einem der Tragelemente (11, 12) verbunden ist, und ein Außenringelement (42), das koaxial zu dem Innenringelement (41) angeordnet ist, wobei das Drehgelenk (30) ferner eine Reibungsbremse (20) zum Ausüben einer Kraft auf eines der Ringelemente (41, 42) umfasst, wobei das Außenringelement (42) um die Achse (A) relativ zu dem Innenringelement (41) in einer ersten Drehrichtung (D1) drehbar und mit dem anderen Tragelement (12, 11) verbunden ist, wobei das Außenringelement (42) zusammen mit dem Innenringelement (41) in einer entgegengesetzten zweiten Drehrichtung (D2) drehen kann, wenn die von der Reibungsbremse (20) ausgeübte Reibungskraft überwunden wird,
**dadurch gekennzeichnet, dass**
das Innenringelement (41) drehbar mit dem ersten Tragelement (11) verbunden ist und das Außenringelement (42) fest mit dem zweiten Tragelement (12) mit dem Trägerelement (13) verbunden ist, wobei die Reibungsbremse (20) eine Kraft auf das Innenringelement (41) ausübt, wobei die Freilaufkupplung (40) ferner eine Vielzahl von Halteelementen (44.1, 44.2) umfasst, die radial zwischen dem Innenringelement (41) und dem Außenringelement (42) angeordnet sind, um den Eingriff zwischen dem Innenringelement (41) und dem Außenringelement (42) in der zweiten Drehrichtung (D2) des Außenringelements (42) zu blockieren und um den Eingriff zwischen dem Innenringelement (41) und dem Außenringelement (42) in der entgegengesetzten ersten Drehrichtung (D1) zu lösen,
wobei die Reibungsbremse (20) ein Druckelement (21.1, 21.2) umfasst, das fest mit einer axialen Seite (46, 47) des Innenringelements (41) der Freilaufkupplung (40) verbunden ist, um die Bremskraft von der Reibungsbremse (20) auf das Innenringelement (41) zu übertragen, und wobei das Drehgelenk (30) eine Schraube (31), die eine Achse bildet, und eine Schraubenmutter (32) umfasst und wobei die Achse und die Schraubenmutter (32) so konfiguriert sind, dass sie die Kraft auf eines der Ringelemente ausüben.

2. Träger (10) nach Anspruch 1, **dadurch gekennzeichnet, dass** die Halteelemente jeweils als ein Klemmstück (44.1), eine Kugel oder eine Rolle (44.2) ausgebildet sind.

3. Träger (10) nach einem der vorstehenden Ansprüche, **dadurch gekennzeichnet, dass** die Halteelemente (44.1, 44.2) gleichmäßig zwischen dem Innenringelement (41) und dem Außenringelement (42) verteilt sind.

4. Träger (10) nach einem der vorstehenden Ansprüche, **dadurch gekennzeichnet, daß** das Innenringelement (41) und das Außenringelement (42) mittels eines Kugellagers drehbar verbunden sind.

5. Träger (10) nach Anspruch 1, **dadurch gekennzeichnet, dass** das Druckelement (21.1, 21.2) mit einem Reibbelag (22.1, 22.2) zusammenwirkt, der vorzugsweise als Ringscheibenelement ausgebildet ist.

6. Träger (10) nach einem der Ansprüche 1 bis 5, **dadurch gekennzeichnet, dass** das Druckelement mittels einer Schlitz- und Keilverbindung fest mit dem Innenringelement verbunden ist.

7. Träger (10) nach einem der Ansprüche 1 bis 6, **dadurch gekennzeichnet, dass** das Druckelement (21.1, 21.2) als Hülse (26.1, 26.2) mit einem an einem Ende zum Kontakt mit dem Reibbelag (22.1, 22.2) ausgebildeten Reibflansch (27.1, 27.2) ausgebildet ist.

8. Träger (10) nach einem der Ansprüche 1 bis 6, **dadurch gekennzeichnet, dass** die Reibungsbremse (20) zwei Sätze von Druckelementen (21.1, 21.2) und Reibbelägen (22.1, 22.2) aufweist, wobei ein Satz auf jeder axialen Seite (46, 47) des Innenringelements (41) angeordnet ist.

9. Stativ (50) zum Tragen einer Anzeigevorrichtung (80), insbesondere einer Anzeigevorrichtung (80) eines medizinischen Geräts in einem Krankenhaus oder einer anderen medizinischen Umgebung, umfassend einen Träger (10) gemäß einem oder mehreren der vorstehenden Ansprüche.

10. Wand- oder Deckenhalterung (60) zum Tragen einer Anzeigevorrichtung (80), insbesondere einer Anzeigevorrichtung (80) eines medizinischen Geräts in einem Krankenhaus oder einer anderen medizinischen Umgebung, umfassend einen Träger (10) gemäß einem oder mehreren der Ansprüche 1 bis 8.

## Revendications

1. Support (10) pour un dispositif médical comprenant un premier élément de support (11) et un second élément de support (12) raccordés par un joint pivotant (30) afin de permettre le mouvement relatif des éléments de support (11, 12) autour d'un axe (A) de rotation, le second élément de support (12) présentant un élément porteur (13) permettant de fixer le dispositif au second élément de support (12), le joint pivotant (30) comprenant un embrayage à roue libre (40) avec un élément annulaire intérieur (41) raccordé sur l'un des éléments de support (11, 12), et un élément annulaire extérieur (42) agencé de manière coaxiale avec l'élément annulaire intérieur (41), le joint pivotant (30) comprenant en outre un frein à friction (20) permettant d'exercer une force sur l'un des éléments annulaires (41, 42), l'élément annulaire extérieur (42) pouvant tourner autour de l'axe (A) relativement à l'élément annulaire intérieur (41) dans une première direction (D1) de rotation et étant raccordé à l'autre élément de support (12, 11), l'élément annulaire extérieur (42) étant capable de tourner avec l'élément annulaire intérieur (41) dans une seconde direction opposée (D2) de rotation lorsque la force de frottement exercée par le frein à friction (20) est surmontée,
**caractérisé en ce que**
l'élément annulaire intérieur (41) est raccordé en rotation au premier élément de support (11), et l'élément annulaire extérieur (42) est raccordé de manière fixe au second élément de support (12) avec l'élément porteur (13), dans lequel le frein à friction (20) exerce une force sur l'élément annulaire intérieur (41), l'embrayage à roue libre (40) comprenant en outre une pluralité d'éléments de retenue (44.1, 44.2) agencés radialement entre l'élément annulaire intérieur (41) et l'élément annulaire extérieur (42) afin de bloquer la prise entre l'élément annulaire intérieur (41) et l'élément annulaire extérieur (42) dans la seconde direction (D2) de rotation de l'élément annulaire extérieur (42) et afin de dégager la prise entre l'élément annulaire intérieur (41) et l'élément annulaire extérieur (42) dans la première direction opposée (D1) de rotation,
dans lequel le frein à friction (20) comprend un élément de pression (21.1, 21.2) qui est raccordé de manière fixe à un côté axial (46, 47) de l'élément annulaire intérieur (41) de l'embrayage à roue libre (40) permettant de transférer la force de freinage du frein à friction (20) à l'élément annulaire intérieur (41), et
dans lequel le joint pivotant (30) comprend une vis (31) qui forme un axe et un écrou de vis (32) et dans lequel l'axe et l'écrou de vis (32) sont configurés afin d'exercer la force sur l'un des éléments annulaires.

2. Support (10) selon la revendication 1, **caractérisé en ce que** les éléments de retenue sont chacun formés comme un élément sélectionné parmi une roue libre (44.1), une bille ou un galet (44.2).

3. Support (10) selon l'une quelconque des revendications précédentes, **caractérisé en ce que** les éléments de retenue (44.1, 44.2) sont uniformément répartis entre l'élément annulaire intérieur (41) et l'élément annulaire extérieur (42).

4. Support (10) selon l'une quelconque des revendications précédentes, **caractérisé en ce que** l'élément annulaire intérieur (41) et l'élément annulaire extérieur (42) sont reliés en rotation au moyen d'un roulement à billes.

5. Support (10) selon la revendication 1, **caractérisé en ce que** l'élément de pression (21.1, 21.2) coopère avec un revêtement de friction (22.1, 22.2), de préférence réalisé sous la forme d'un élément de disque annulaire.

6. Support (10) selon l'une quelconque des revendications 1 à 5, **caractérisé en ce que** l'élément de pression est raccordé sous pression fixement à l'élément annulaire intérieur au moyen d'une fente et d'un raccordement à clé.

7. Support (10) selon l'une quelconque des revendications 1 à 6, **caractérisé en ce que** l'élément de pression (21.1, 21.2) est formé comme un manchon (26.1, 26.2) avec une bride de friction (27.1, 27.2) formée à une extrémité afin d'entrer en contact avec le revêtement de friction (22.1, 22.2).

8. Support (10) selon l'une quelconque des revendications 1 à 6, **caractérisé en ce que** le frein à friction (20) inclut deux ensembles d'éléments de pression (21.1, 21.2) et de revêtements de friction (22.1, 22.2), un ensemble sur chaque côté axial (46, 47) de l'élément annulaire intérieur (41).

9. Pied (50) permettant de supporter un dispositif d'affichage (80), en particulier un dispositif d'affichage (80) d'un équipement médical dans un hôpital ou un autre environnement médical, comprenant un support (10) selon l'une ou plusieurs des revendications précédentes.

10. Montage mural ou au plafond (60) permettant de supporter un dispositif d'affichage (80), en particulier un dispositif d'affichage (80) d'un équipement médical dans un hôpital ou un autre environnemental médical comprenant un support (10) selon l'une ou plusieurs des revendications 1 à 8.
